# EUROPEAN PATENT APPLICATION

(11) **EP 3 406 746 A1**
(43) Date of publication of application: **28.11.2018**
(21) Application number: 18159579.4
(22) Date of filing: 01.03.2018
(51) Int. Cl.: C22C 28/00, C22C 9/00, B32B 15/01, F25B 21/00, H01F 1/01

(54) **METAL-COVERED GADOLINIUM WIRE ROD AND HEAT EXCHANGER AND MAGNETIC REFRIGERATOR USING THE SAME**

(30) Priority: 23.05.2017 JP 2017101664
(71) Applicant: Fujikura, Ltd., Tokyo 135-8512 (JP)
(72) Inventor: Nomura, Ryujiro, Chiba, 285-8550 (JP); Kizaki, Takeshi, Chiba, 285-8550 (JP); Takeuchi, Katsuhiko, Chiba, 285-8550 (JP); Kondo, Masahiro, Chiba, 285-8550 (JP); Ishikawa, Kohki, Chiba, 285-8550 (JP); Ueno, Kota, Chiba, 285-8550 (JP)
(74) Representative: Ter Meer Steinmeister & Partner

(57) **Abstract**

Provided is a metal-covered gadolinium wire rod including: a gadolinium wire including gadolinium as a main component, as a core; and a clad layer including, as a main component, a metal other than gadolinium, the clad layer covering the periphery of the core.

## Description

### BACKGROUND OF THE INVENTION

### Field of the Invention

The present invention relates to a metal-covered gadolinium wire rod comprising: a gadolinium wire including gadolinium as a main component, as a core; and a clad layer including, as a main component, a metal other than gadolinium, the clad layer covering the periphery of the core; and also to a heat exchanger and a magnetic refrigerator using the same.

### Description of the Related Art

Magnetic refrigeration technologies utilizing the magnetocaloric effect have been studied. As one promising magnetic refrigeration technology, an AMR (Active Magnetic Refrigeration) cycle is exemplified. In such a magnetic refrigeration technology, effective methods for increases in efficiency and output include a method including increasing the surface area of a magnetic refrigeration material to thereby enhance the heat-exchange efficiency from the magnetic refrigeration material to a refrigerant, and a method including ensuring the flow path for a refrigerant to thereby reduce the pressure loss. The magnetic refrigeration material for use in such a magnetic refrigeration technology usually has a particle shape, and such a particle-shaped magnetic refrigeration material is inserted into a tubular case to provide a heat exchanger. There has been proposed a magnetic refrigerator in which such a heat exchanger is adopted (see, for example, Japanese Patent Publication No. 2010-77484). On the other hand, there has been proposed a method for increases in efficiency and output by using a magnetic refrigeration material processed into a cylinder, whereas a common magnetic refrigeration material has a particle shape (see, for example, Japanese Patent Publication No. 2013-64588).

In Japanese Patent Publication No. 2013-64588 above, the technique for processing a magnetic refrigeration material into a cylinder is disclosed, but it is demanded to process a magnetic refrigeration material so that a small wire diameter is obtained for further increases in efficiency and output. On the other hand, a material including gadolinium as a main component, serving as a magnetic refrigeration material, can be drawn (extended) using a die or the like, but the material has the problems of being easily sticking to the die or the like and being inferior in processability, and thus is difficult to process into a wire rod small in wire diameter (for example, wire rod having a wire diameter of less than 1 mm).

An object of the present invention is to provide a metal-covered gadolinium wire rod excellent in processability.

### SUMMARY OF THE INVENTION

[1] The metal-covered gadolinium wire rod of the present invention is a metal-covered gadolinium wire rod comprising:
   a gadolinium wire including gadolinium as a main component, as a core; and
   a clad layer including, as a main component, a metal other than gadolinium, the clad layer covering the periphery of the core.
[2] The present invention can be configured so that an area occupied by the gadolinium wire in a cross section perpendicular to a longitudinal direction of the metal-covered gadolinium wire rod is 55 to 99% relative to an area of the cross section.
[3] The present invention can be configured so that the clad layer includes copper, aluminum, nickel and/or an alloy thereof.
[4] The present invention can be configured so that the clad layer further includes a carbon nanotube.
[5] The present invention can be configured so that the metal-covered gadolinium wire rod is a drawn wire rod.
[6] The present invention can be configured so that the gadolinium wire as the core includes gadolinium as a main component, and has an average particle size of a segregated phase containing fluorine atom and/or chlorine atom of 2 µm or less.
[7] The present invention can be configured so that the gadolinium wire as the core includes gadolinium as a main component, and has a presence density of a segregated phase containing fluorine atom and/or chlorine atom with a particle size of 5 µm or more of 4.7 × 10⁻⁵/µm² or less.
[8] The heat exchanger according to the present invention includes:
   a plurality of wire rods formed of a magnetic refrigeration material; and
   a case housing the plurality of wire rods;
   wherein the wire rods are each the metal-covered gadolinium wire rod according to the present invention.
[9] The magnetic refrigerator according to the present invention includes the heat exchanger according to the present invention.

The present invention can provide a metal-covered gadolinium wire rod excellent in processability.

### BRIEF DESCRIPTION OF THE DRAWINGS

Figure 1(A) is a reflection electron image of a gadolinium wire cross section, and Figure 1(B) is a reflection electron image after binarization processing, where the reflection electron image of Figure 1(A) is subjected to binarization processing;
Figure 2 illustrates the entire configuration of a magnetic refrigerator including an MCM heat exchanger according to one embodiment of the present invention;
Figure 3 is an exploded perspective view illustrating the configuration of an MCM heat exchanger according to one embodiment of the present invention;
Figure 4 is a reflection electron image of a cross section of a drawn wire rod (metal-covered gadolinium wire rod) of Example 1;
Figure 5 is a reflection electron image of a cross section of a drawn wire rod (metal-covered gadolinium wire rod) of Example 2;
Figure 6 is a reflection electron image of a cross section of a drawn wire rod (metal-covered gadolinium wire rod) of Example 3; and
Figure 7 is a reflection electron image of a cross section of a drawn wire rod (metal-covered gadolinium wire rod) of Reference Example 1.

### DETAILED DESCRIPTION OF THE PREFERRED EMBODIMENTS

### «Metal-covered gadolinium wire rod»

A metal-covered gadolinium wire rod according to the present embodiment is a metal-covered gadolinium wire rod comprising: a gadolinium wire including gadolinium as a main component, as a core; and a clad layer including, as a main component, a metal other than gadolinium, the clad layer covering the periphery of the core.

The gadolinium wire as the core, constituting the metal-covered gadolinium wire rod according to the present embodiment, includes gadolinium (Gd) as a main component, and may include a gadolinium alloy. The gadolinium wire as the core, according to the present embodiment, includes gadolinium as a main component, and the content of gadolinium in the gadolinium wire as the core is preferably 80% by weight or more, more preferably 95% by weight or more, further preferably 99% by weight or more. When the gadolinium wire as the core includes gadolinium as a main component in the form of a gadolinium alloy, the content of gadolinium in the gadolinium wire as the core is preferably 50% by weight or more, more preferably 60% by weight or more, further preferably 70% by weight or more. Examples of the gadolinium alloy include an alloy of gadolinium and a rare-earth element. Examples of the rare-earth element include Y, Sc, La, Ce, Pr, Nd, Pm, Sm, Eu, Tb, Dy, Ho, Er, Tm, Yb and Lu, and among them, an alloy of gadolinium and Y, Gd₉₅Y₅, and the like are exemplified.

In the present embodiment, the outer periphery of the gadolinium wire as the core is covered with the clad layer including, as a main component, a metal other than gadolinium, thereby providing the metal-covered gadolinium wire rod, and thus, when drawing (extending) is performed using a die or the like, the occurrence of sticking to the die or the like can be effectively prevented, thereby allowing excellent processability to be realized. As a result, the wire diameter can be then preferably as fine as 0.1 to 1.0 mm, more preferably 0.1 to 0.5 mm with high processability. Thus, when used as the magnetic refrigeration material in the magnetic refrigeration technology utilizing the magnetocaloric effect, the metal-covered gadolinium wire rod is high in heat-exchange efficiency with the refrigerant and can be suitably used as the magnetic refrigeration material.

The material for formation of the clad layer may be one including, as a main component, a metal other than gadolinium and is not particularly limited. It is preferably copper, aluminum, nickel and/or an alloy thereof, more preferably copper or a copper alloy in view of satisfying drawability, corrosion resistance and thermal conductivity in a well-balanced manner. In particular, thermal conductivity is important in order that the amount of cold energy generated by the gadolinium wire as the core is properly transferred to the surface of the metal-covered gadolinium wire rod.

In order to complement thermal conductivity of the clad layer, the clad layer may contain a carbon-based material such as a carbon nanotube. The carbon nanotube may be a carbon-based material where a graphene sheet has a tubular shape, and may be any of a single-walled nanotube (SWNT) and a multi-walled nanotube (MWNT).

Next, a preferable embodiment of a fine structure of the gadolinium wire as the core will be described.

Gadolinium as a main component, constituting the gadolinium wire as the core, usually includes small amounts of unavoidable impurities. Examples of such unavoidable impurities include oxide-based impurities including carbon and oxygen, halogen-based impurities such as fluorine and chlorine, and rare metal-based impurities such as tungsten.

According to findings of the present inventors, impurities included in the gadolinium wire as the core, in particular, a segregated phase containing fluorine atom and/or chlorine atom may be broken depending on processing conditions during various processings such as drawing (extending), thereby causing a void, and may serve as the point of origin of cracking, to result in a reduction in the strength of a wire rod. Therefore, in the present embodiment, the outer periphery of the gadolinium wire as the core can be covered with the clad layer including, as a main component, a metal other than gadolinium, as described above, thereby allowing sufficient processability to be realized, and the following fine structure of the gadolinium wire as the core is preferable in view of a more enhancement in such processability. In addition, the following fine structure of the gadolinium wire as the core can be made to thereby properly draw the gadolinium wire as the core even without any intermediate heat treatment, resulting in a more enhancement in production efficiency. The gadolinium wire as the core, however, is not intended to be limited to one having a fine structure described below at all.

Specifically, in the present embodiment, the average particle size of the segregated phase containing fluorine atom and/or chlorine atom unavoidably included in the wire rod as the core including gadolinium as a main component is preferably controlled to 2 µm or less, which is the first fine structure mode.

In the first fine structure mode, the segregated phase containing fluorine atom and/or chlorine atom means a phase where a fluorine atom and/or a chlorine atom are/is localized (a phase containing a fluorine atom and/or a chlorine atom in large amounts), and may be any of phases such as a phase where a fluorine atom and/or a chlorine atom are/is contained in the form of a fluoride and/or chloride of gadolinium, and a phase where a fluorine atom and/or a chlorine atom are/is contained in the form of an oxide, nitride or the like.

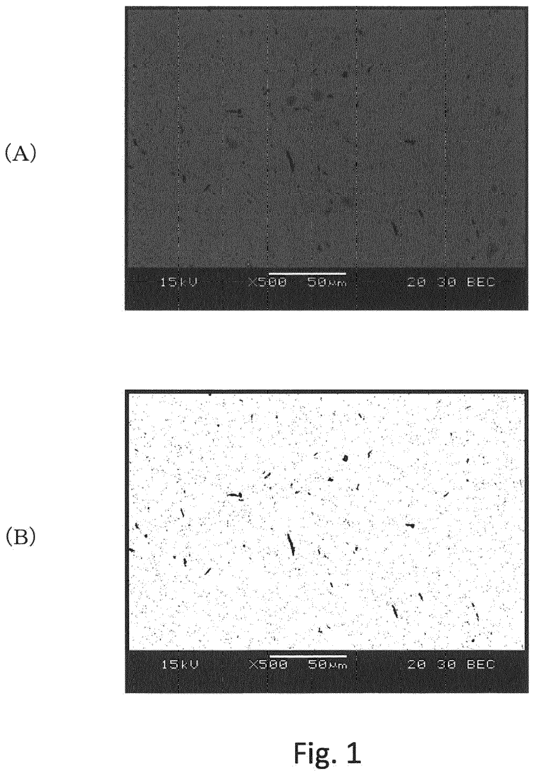

The segregated phase containing fluorine atom and/or chlorine atom is, for example, a phase where a fluorine atom and/or a chlorine atom are/is localized to an extent such that the fluorine atom and/or chlorine atom concentration detected is 1% or more when the total atom concentration of gadolinium, fluorine, chlorine, calcium, iron, oxygen, yttrium and tungsten elements is taken as 100% at a measurement point in measurement of the strength of fluorine atom and/or chlorine atom detected on any cross section of the gadolinium wire, according to a componential analysis method by EDS (Energy Dispersive Spectroscopy) analysis. These can be detected by, for example, subjecting any cross section of the gadolinium wire to measurement of a reflection electron image with a scanning electron microscope (SEM). Specifically, these can be detected by performing binarization at a predetermined threshold by use of image analysis with respect to the reflection electron image obtained with a scanning electron microscope. For example, Figure 1(A) and Figure 1(B) illustrate a reflection electron image of a cross section of a gadolinium wire according to Examples of the present invention and a reflection electron image after binarization by image analysis with respect to the reflection electron image of Figure 1(A), respectively. In Figure 1(B), the segregated phase containing fluorine atom and/or chlorine atom is detected as a heterogeneous phase illustrated by a black color. Herein, the predetermined threshold for use in binarization may be set to a threshold at which a phase where a fluorine atom and/or a chlorine atom are/is localized to an extent such that the fluorine atom and/or chlorine atom concentration detected is 1% or more when the total atom concentration of gadolinium, fluorine, chlorine, calcium, iron, oxygen, yttrium and tungsten elements, detected according to a componential analysis method or the like by EDS (Energy Dispersive Spectroscopy) analysis, is taken as 100% at a measurement point of the measurement region of any cross section of the gadolinium wire.

Alternatively, a secondary electron image obtained by measurement with a scanning electron microscope may be used in combination in the above method to further analyze the heterogeneous phase illustrated by a black color in Figure 1(B).

The segregated phase containing fluorine atom and/or chlorine atom thus detected can be then subjected to particle size measurement and the arithmetic average of the obtained particle size measurement results can be determined to thereby determine the average particle size of the segregated phase containing fluorine atom and/or chlorine atom. Specifically, any five locations on the cross section of the gadolinium wire are subjected to reflection electron image measurement in the visual field range of 256 µm × 166 µm, and five reflection electron images obtained by measurement in the visual field range of 256 µm × 166 µm are used to determine the average particle size. Herein, the segregated phase containing fluorine atom and/or chlorine atom is approximated to a circle having the same area by use of image analysis technique to thereby determine a circle equivalent diameter, and the circle equivalent diameter is defined as the particle size of each segregated phase. Furthermore, in average particle size measurement, the average particle size is to be determined under the assumption that a heterogeneous phase with a particle size of 1 µm or less does not correspond to the segregated phase containing fluorine atom and/or chlorine atom in calculation of the average particle size, from the viewpoint that any measurement error and any influence of a heterogeneous phase other than the segregated phase containing fluorine atom and/or chlorine atom are removed.

Alternatively, there may be adopted, instead of the above method where measurement is conducted at any five locations on the cross section perpendicular to the wire rod longitudinal direction, a method including cutting the gadolinium wire as a drawn wire at any five locations to obtain any five cross sections perpendicular to the wire rod longitudinal direction, subjecting each of the resulting five cross sections (N = 5) to reflection electron image measurement in the visual field range of 256 µm × 166 µm, and using five reflection electron images obtained by the measurement in the visual field range of 256 µm × 166 µm to determine the average particle size. With respect to the measurement range on each cut cross section, when the size of the cut cross section is a size where the measurement in the visual field range of 256 µm × 166 µm can be made, the measurement may be conducted in the visual field range of 256 µm × 166 µm, or when the size of the cut cross section is a size where the measurement in the visual field range of 256 µm × 166 µm cannot be made (the size of the cut cross section is less than 256 µm × 166 µm), the measurement may be conducted on the entire cut cross section. In particular, when the measurement in the visual field range of 256 µm × 166 µm cannot be made on one cross section (the size of the cut cross section is less than 256 µm × 166 µm), for example, when the wire diameter of the gadolinium wire rod is small, such a method is desirably adopted.

In the first fine structure mode, the average particle size of the segregated phase containing fluorine atom and/or chlorine atom unavoidably included in the wire rod as the core including gadolinium as a main component is 2 µm or less, preferably 1.8 µm or less. When the average particle size of the segregated phase containing fluorine atom and/or chlorine atom is 2 µm or less, the strength of the gadolinium wire can be more enhanced, thereby allowing characteristics of various processings such as drawing (extending) to be more excellent.

Alternatively, in the present embodiment, the presence density of a segregated phase of 5 µm or more (namely, the number present per unit area) in the segregated phase containing fluorine atom and/or chlorine atom unavoidably included in the wire rod as the core including gadolinium as a main component, namely, the presence density of a segregated phase containing fluorine atom and/or chlorine atom with a particle size of 5 µm or more therein (hereinafter, sometimes referred to as "the presence density of the segregated phase of 5 µm or more".) is preferably set to 4.7 × 10⁻⁵/µm² or less, which is the second fine structure mode.

In the second fine structure mode, the segregated phase containing fluorine atom and/or chlorine atom means a phase where a fluorine atom and/or a chlorine atom are/is localized. For example, it may be any of phases such as a phase where a fluorine atom and/or a chlorine atom are/is contained in the form of a fluoride and/or chloride of gadolinium, and a phase where a fluorine atom and/or a chlorine atom are/is contained in the form of an oxide, nitride or the like, as in the first fine structure mode described above, and can be detected by, for example, measurement of a reflection electron image with a scanning electron microscope (SEM). Alternatively, a secondary electron image obtained by measurement with a scanning electron microscope may also be used in combination, as in first fine structure mode.

The presence density of the segregated phase of 5 µm or more can be determined by subjecting the segregated phase containing fluorine atom and/or chlorine atom detected in the same manner as in the first fine structure mode described above, to particle size measurement, counting the number of segregated phase(s) of 5 µm or more, and dividing the number of segregated phase(s) of 5 µm or more by the measurement area (unit: µm²). Specifically, the presence density of the segregated phase of 5 µm or more can be determined by cutting the gadolinium wire as a drawn wire at any five locations to provide any five cross sections perpendicular to the wire rod longitudinal direction, subjecting the resulting five cross sections (N = 5) to reflection electron image measurement in the viewing field range depending on the size of each of the cut cross sections, and counting the number of segregated phase(s) of 5 µm or more and dividing it by the measurement area (unit: µm²). Herein, the segregated phase containing fluorine atom and/or chlorine atom detected is approximated to a circle having the same area by use of image analysis technique to thereby determine a circle equivalent diameter, and the circle equivalent diameter is defined as the particle size of each segregated phase. With respect to the measurement range on each cut cross section, when the size of the cut cross section is a size where the measurement in the visual field range of 256 µm × 166 µm can be made, the measurement may be conducted in the visual field range of 256 µm × 166 µm, or when the size of the cut cross section is a size where the measurement in the visual field range of 256 µm × 166 µm cannot be made (the size of the cut cross section is less than 256 µm × 166 µm), the measurement may be conducted on the entire cut cross section.

In the second fine structure mode, the presence density of the segregated phase of 5 µm or more unavoidably included in the wire rod as the core including gadolinium as a main component is 4.7 × 10⁻⁵/µm² or less, preferably 3.0 × 10⁻⁵/µm² or less, more preferably 2.7 × 10⁻⁵/µm² or less. When the presence density of the segregated phase of 5 µm or more is 4.7 × 10⁻⁵/µm² or less, the strength of the gadolinium wire can be more enhanced, thereby allowing characteristics of various processings such as drawing (extending) to be more excellent.

The metal-covered gadolinium wire rod of the present embodiment can be obtained by providing the gadolinium wire as the core (for example, providing a gadolinium wire having the first fine structure mode or the second fine structure mode), and covering the outer periphery of the resulting gadolinium wire as the core with the clad layer including, as a main component, a metal other than gadolinium.

The method for producing the gadolinium wire as the core is not particularly limited, and a method is preferable which includes cutting out a round rod material having a predetermined diameter from a casting material of gadolinium, and repeating hot swaging at a reduction of area of 10 to 50% with the round rod material cut out being pre-heated to thereby perform such processing until the final reduction of area after hot swaging preferably reaches 90% or more, more preferably 95% or more, further preferably 97% or more. The pre-heating temperature here is preferably 400°C or more, more preferably 500°C or more, further preferably 600°C or more. According to the present embodiment, such repeated hot swaging can allow a phase containing a fluorine atom and/or a chlorine atom in large amounts and included in a wire rod including gadolinium as a main component to become finer, thereby allowing a fine structure of gadolinium and/or a gadolinium alloy constituting the gadolinium wire as the core to be the first fine structure mode and/or the second fine structure mode. Although hot swaging is exemplified as the method for providing the first fine structure mode and/or second fine structure mode in the present embodiment, hot processing is not particularly limited to hot swaging, and any method including other hot-processing, for example, casting, rolling or extrusion can be used as long as the phase containing a fluorine atom and/or a chlorine atom in large amounts can become suitably finer.

The wire diameter of the gadolinium wire as the core, thus obtained, is not particularly limited, and it is preferably 2 to 10 mm.

The gadolinium wire as the core, obtained by the above method, can be then inserted into a tubular member made of a metal material for formation of the clad layer, thereby providing a metal-covered gadolinium wire rod where the outer periphery of the gadolinium wire as the core is covered with the clad layer including, as a main component, a metal other than gadolinium. In the present embodiment, after the gadolinium wire as the core is inserted into the tubular member made of a metal material for formation of the clad layer, the gadolinium wire and the tubular member may be subjected to a treatment for integration. When the gadolinium wire is inserted into the tubular member, it is preferable to insert the gadolinium wire into the tubular member after a treatment for removal of each of an oxide film on the surface of the gadolinium wire and an oxide film on the inner wall surface of the tubular member. The method for removing such oxide films is not particularly limited, and examples thereof include a method for removal by washing with an acid or an alkali and a method for removal by mechanical polishing.

In the present embodiment, the metal-covered gadolinium wire rod thus obtained can be drawn (extended) with a die or the like, thereby providing a drawn wire rod having a desired wire diameter. The metal-covered gadolinium wire rod of the present embodiment comprises the gadolinium wire as the core and the clad layer including, as a main component, a metal other than gadolinium, and the clad layer covers the outer periphery of the core. Thus, when drawing (extending) is performed using a die or the like, the occurrence of sticking to the die or the like can be effectively prevented, thereby allowing excellent processability to be realized. Therefore, a drawn wire rod whose wire diameter is preferably as fine as 0.1 to 1.0 mm, more preferably 0.1 to 0.5 mm can be obtained by drawing (extending) using a die or the like, and thus, when used as the magnetic refrigeration material in the magnetic refrigeration technology utilizing the magnetocaloric effect, the drawn wire rod is high in heat-exchange efficiency with the refrigerant and can be suitably used as the magnetic refrigeration material.

The metal-covered gadolinium wire is smaller in the change in the surface temperature during application of a predetermined magnetic field than a gadolinium wire covered with no metal. It has been then found that the change in the surface temperature of the metal-covered gadolinium wire is smaller in proportion to a decrease in the area occupied by the gadolinium wire in the cross section perpendicular to the longitudinal direction of the metal-covered gadolinium wire, namely, an increase in the area occupied by the clad layer therein. Therefore, the proportion of the area occupied by the gadolinium wire in the cross sectional area is preferably 55 to 99% in order that a sufficient change in the surface temperature (the amount of cold energy) as the metal-covered gadolinium wire rod is exhibited, and thus, when the metal-covered gadolinium wire rod is used as the magnetic refrigeration material in the magnetic refrigeration technology utilizing the magnetocaloric effect, it exerts a sufficient effect of processability by formation of the clad layer while having an enhanced heat-exchange efficiency with the refrigerant. Herein, a sufficient change in the surface temperature (the amount of cold energy) exhibited as the metal-covered gadolinium wire rod is preferably 50% or more relative to the change in the surface temperature of the gadolinium wire covered with no metal, namely, a wire of pure gadolinium.

Also in the drawn wire rod obtained by drawing (the drawn wire rod of the metal-covered gadolinium wire, obtained by drawing), the fine structure of the wire rod as the core including gadolinium as a main component is not particularly limited, and the drawn wire rod preferably has the first fine structure mode (the average particle size of the segregated phase containing fluorine atom and/or chlorine atom is 2 µm or less, preferably 1.8 µm or less) or the second fine structure mode (the presence density of the segregated phase of 5 µm or more is 4.7 × 10⁻⁵/µm² or less, preferably 3.0 × 10⁻⁵/µm² or less, more preferably 2.7 × 10⁻⁵/µm² or less).

In view of being used in the magnetic refrigeration technology utilizing magnetocaloric effect, the metal-covered gadolinium wire rod of the present embodiment is preferably one where no gadolinium core is exposed even at both ends thereof, and therefore the both ends are preferably sealed by plating with the metal material used for formation of the clad layer, or sealed by a resin material or the like. If the gadolinium core is exposed at the both ends, the gadolinium core may be corroded depending on the difference in ionization tendency between the gadolinium core and the clad layer, and thus the both ends can be sealed to thereby properly prevent such a failure.

### «Magnetic refrigerator»

Next, a magnetic refrigerator 1 to which the metal-covered gadolinium wire rod of the present embodiment is applied will be described.

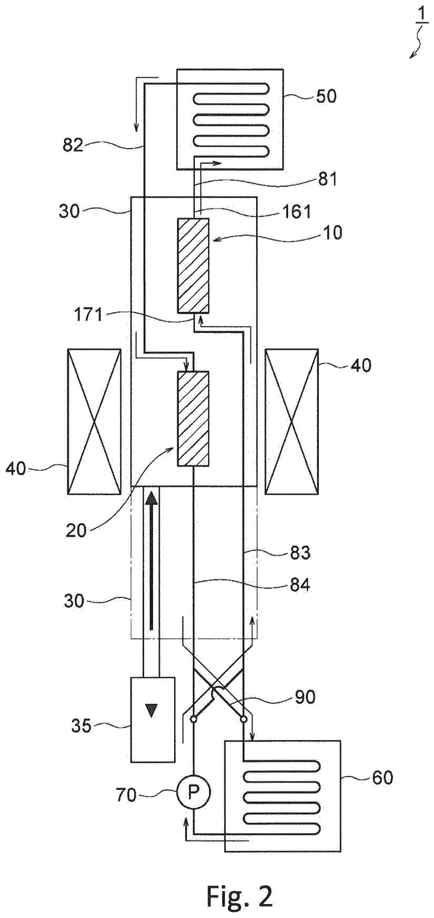

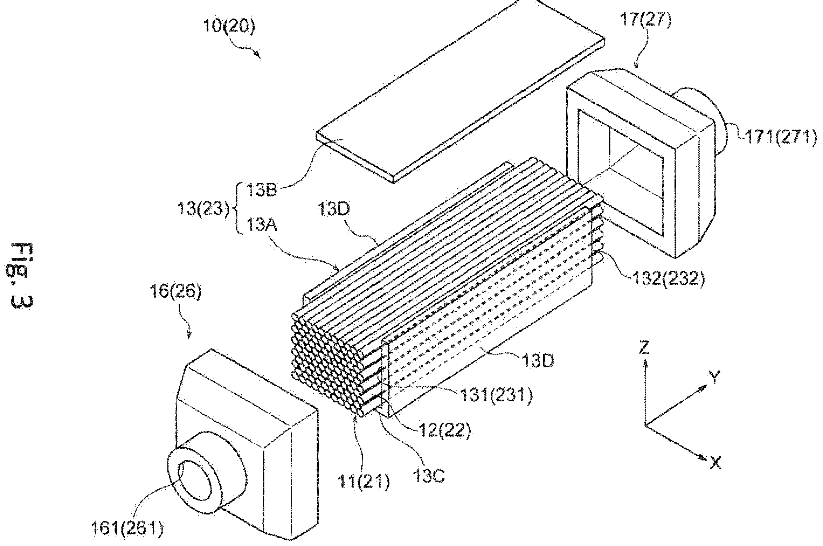

Figure 2 is a view illustrating the entire configuration of a magnetic refrigerator 1 including first and second MCM heat exchangers 10 and 20 according to an embodiment of the present invention. Figure 3 is an exploded perspective view illustrating the configuration of the first and second MCM heat exchangers 10 and 20 according to the present embodiment.

The magnetic refrigerator 1 in the present embodiment is a heat pump apparatus utilizing the magnetocaloric effect, and includes first and second MCM heat exchangers 10 and 20, a piston 30, a permanent magnet 40, a low-temperature heat exchanger 50, a high-temperature heat exchanger 60, a pump 70, pipes 81 to 84 and a changeover valve 90, as illustrated in Figure 2.

As illustrated in Figure 3, the first MCM heat exchanger 10 includes an aggregate 11 including a plurality of linear objects 12, a case 13 through which the aggregate 11 is inserted, and a first adapter 16 and a second adapter 17 connected to the case 13. Herein, the first MCM heat exchanger 10 and the second MCM heat exchanger 20 are similarly configured, therefore only the configuration of the first MCM heat exchanger 10 is described below, and the description about the configuration of the second MCM heat exchanger 20 is omitted and the description about the configuration of the first MCM heat exchanger 10 is incorporated thereto. In Figure 3, the first MCM heat exchanger 10 is illustrated, and the corresponding symbols with respect to the second MCM heat exchanger 20 are merely noted in brackets and illustration is omitted.

The linear objects 12 are each a wire rod which is formed from a magnetocaloric effect material exerting the magnetocaloric effect (MCM: Magnetocaloric Effect Material) and which has a circular cross-sectional shape. When a magnetic field is applied to the linear objects 12 formed from MCM, electron spins are aligned to result in a decrease in magnetic entropy, and the linear objects 12 generate heat to provide temperature rise. On the other hand, when the magnetic field is removed from the linear objects 12, electron spins are disordered to result in an increase in magnetic entropy, and the linear objects 12 absorb heat to provide temperature drop.

In the present embodiment, the metal-covered gadolinium wire rod according to the present embodiment is used in the linear objects 12.

The aggregate 11 is constituted of a bundle of the plurality of linear objects 12 mutually arranged in parallel. The side surfaces of adjacent linear objects 12 are in contact with each other, and a flow path is consequently formed therebetween.

The aggregate 11 of the linear objects 12 is inserted through the case 13. As illustrated in Figure 3, the case 13 is formed in a rectangular tubular manner. A first opening 131 and a second opening 132 are formed at one end and another end in the axis direction of the case 13, respectively.

The case 13 includes a linear object-receiving portion 13A whose cross sectional shape orthogonal to the axis direction is a U-shape, and a rectangular plate-shaped lid portion 13B. The linear object-receiving portion 13A includes a bottom portion 13C forming the bottom portion of the case 13, and a pair of wall portions 13D forming the side wall portions located at both sides of the case 13. The end in the width direction of the lid portion 13B is secured to the upper end of the wall portion 13D, thereby allowing the upper portion of the linear object-receiving portion 13A to be closed by the lid portion 13B.

As illustrated in Figure 3, the first adapter 16 is connected to the first opening 131 of the case 13, and the second adapter 17 is connected to the second opening 132 thereof. The first adapter 16 has a first connection opening 161 at a location opposite to a location at which the first adapter 16 is to be connected to the first opening 131. The first connection opening 161 is communicated with the low-temperature heat exchanger 50 via a first low-temperature pipe 81. The second adapter 17 also has a second connection opening 171 at a location opposite to a location at which the second adapter 17 is to be connected to the second opening 132. The second connection opening 171 is communicated with the high-temperature heat exchanger 60 via a first high-temperature pipe 83.

For example, as illustrated in Figure 2, when an air conditioning apparatus using the magnetic refrigerator 1 of the present embodiment serves as a cooling apparatus, heat exchange is performed between the low-temperature heat exchanger 50 and air in a room to thereby cool the room, and also heat exchange is performed between the high-temperature heat exchanger 60 and air outside the room to thereby release heat outside the room. On the other hand, when the air conditioning apparatus serves as a heating apparatus, heat exchange is performed between the high-temperature heat exchanger 60 and air in a room to thereby warm the room, and also heat exchange is performed between the low-temperature heat exchanger 50 and air outside the room to thereby absorb heat from the outside of the room.

As described above, a circulation path including the four MCM heat exchangers 10, 20, 50 and 60 is formed by the two low-temperature pipes 81 and 82 and the two high-temperature pipes 83 and 84, and a liquid medium is pumped into the circulation path by the pump 70. Specific examples of the liquid medium can include liquids such as water, an antifreeze liquid, an ethanol liquid or a mixture thereof.

The two MCM heat exchangers 10 and 20 are received in the piston 30. The piston 30 can reciprocate between a pair of permanent magnets 40 by an actuator 35. Specifically, the piston 30 can move from a position indicated in Figure 2 to a position indicated by a dashed-dotted line in Figure 2, and reciprocates between such points.

The changeover valve 90 is provided on each of the first high-temperature pipe 83 and the second high-temperature pipe 84. The changeover valve 90 interlocks with the movement of the piston 30, to switch a destination to which the liquid medium is to be fed by the pump 70, to the first MCM heat exchanger 10 or the second MCM heat exchanger 20, and also switch a destination to which the high-temperature heat exchanger 60 is to be connected, to the second MCM heat exchanger 20 or the first MCM heat exchanger 10.

The piston 30 is then moved from a position indicated by a dashed-dotted line in Figure 2 to a position indicated in Figure 2, thereby demagnetizing the linear objects 12 of the first MCM heat exchanger 10 to result in temperature drop, and on the other hand, magnetizing the linear objects 22 of the second MCM heat exchanger 20 to result in temperature rise.

Simultaneously, a pathway (pathway indicated by an arrow in Figure 2) including the following in the following order: pump 70 → first high-temperature pipe 83 → first MCM heat exchanger 10 → first low-temperature pipe 81 → low-temperature heat exchanger 50 → second low-temperature pipe 82 → second MCM heat exchanger 20 → second high-temperature pipe 84 → high-temperature heat exchanger 60 → pump 70; is formed by the changeover valve 90.

Therefore, the liquid medium is cooled by the linear objects 12 of the first MCM heat exchanger 10, having a decreased temperature by demagnetizing, and the liquid medium is fed to the low-temperature heat exchanger 50 to cool the low-temperature heat exchanger 50. On the other hand, the liquid medium is heated by the linear objects 22 of the second MCM heat exchanger 20, having an increased temperature by magnetizing, and the liquid medium is fed to the high-temperature heat exchanger 60 to heat the high-temperature heat exchanger 60.

Next, the piston 30 is moved from a position indicated in Figure 2 to a position indicated by a dashed-dotted line in Figure 2, thereby magnetizing the linear objects 12 of the first MCM heat exchanger 10 to result in temperature rise, and on the other hand, demagnetizing the linear objects 22 of the second MCM heat exchanger 20 to result in temperature drop. Simultaneously, the same pathway as described above is formed by the changeover valve 90, thereby cooling the low-temperature heat exchanger 50 and heating the high-temperature heat exchanger 60.

The piston 30 then reciprocates repeatedly, and a magnetic field is repeatedly applied to and removed from the linear objects 12 and 22 of the first and second MCM heat exchangers 10 and 20, thereby continuously cooling the low-temperature heat exchanger 50 and heating the high-temperature heat exchanger 60.

### Examples

Hereinafter, the present invention will be more specifically described with reference to Examples, but the present invention is not limited to these Examples.

### <Example 1>

### <Production of gadolinium wire>

A round gadolinium rod material of ϕ12 mm × 120 mm was cut out from a commercially available gadolinium casting material (including gadolinium as a main component). The round rod material cut out was subjected to hot swaging at a reduction of area of 20% ten times repeatedly with being pre-heated to 500°C, thereby producing a gadolinium wire having a reduction of area of 95.3% relative to the round rod material. Herein, the wire diameter of the resulting gadolinium wire was 2.6 mm.

### <Measurement of segregated phase containing fluorine atom and/or chlorine atom with respect to gadolinium wire rod after hot swaging>

The gadolinium wire rod obtained above was cut at any transverse section (cross section perpendicular to the wire rod longitudinal direction), and a cut portion was embedded in an epoxy resin and mechanically polished to thereby expose a cross section, thereby producing a measurement sample. A reflection electron image was taken by a scanning electron microscope (product name "JSM-5610LV", manufactured by JEOL Ltd.) at any five locations of the resulting measurement sample. The conditions here were as follows: output: 15 kV, operating distance: 20 mm, spot size: 30 mm and magnification: 500-fold. The resulting five reflection electron images were then acquired as an image having a visual field of 1280 × 960 pixels at a resolution of 5 pixels/µm. The resulting reflection electron image is illustrated in Figure 1(A).

In the resulting reflection electron image, a visual field of 1280 × 830 pixels = 256 µm × 166 µm, where a label region was removed, of an image size of 1280 × 960 pixels was defined as an object to be analyzed, and subjected to image analysis using image analysis software (product name "Image J 1.49 ver.", manufactured by National Institute of Health). Specifically, Image type was read as 8 bit in the image analysis software, and analysis was performed at a scale setting of 5 pixels/µm. Herein, the lower limit and the upper limit of the grayscale divided to 256 tones were set to 0 and 30, respectively, with respect to the threshold of Threshold in the setting of the image analysis software, and thus binarization processing was performed. According to the present Example, such a threshold could be set to thereby properly detect the segregated phase containing fluorine atom and/or chlorine atom. The resulting reflection electron image after binarization processing is illustrated in Figure 1(B). In Figure 1(B), a black portion corresponds to a portion where the segregated phase containing fluorine atom and/or chlorine atom is present.

Next, the resulting reflection electron image after binarization processing was subjected to detection using an Analyze function of the image analysis software, the segregated phase containing fluorine atom and/or chlorine atom detected was approximated to a circle having the same area, based on the number of pixels on the image, to thereby determine a circle equivalent diameter, and the circle equivalent diameter was defined as the particle size of the segregated phase containing fluorine atom and/or chlorine atom. Herein, the size of Analyze particles in Analyze function of the image analysis software was set to 1-Infinity, and a fine particle having a particle size of 1 µm or less was excluded from the measurement subjects from the viewpoint that any measurement error and any influence of a heterogeneous phase other than the segregated phase containing fluorine atom and/or chlorine atom were removed. Furthermore, exclude on edge as an option of the image analysis software was used in image analysis, and any particle striding over the edge of the reflection electron image was also excluded from the measurement subjects.

The reflection electron images obtained at any five locations were each subjected to the above measurement, and the average particle size of the segregated phase containing fluorine atom and/or chlorine atom was determined by determining the arithmetic average value from the resulting particle size of the segregated phase containing fluorine atom and/or chlorine atom. Herein, the respective average particle sizes in the reflection electron images obtained at the five locations in Example 1 were 2.0 µm, 2.0 µm, 1.7 µm, 1.7 µm and 1.9 µm, and the average value with respect to all of the reflection electron images obtained at the five locations was 1.9 µm.

In addition to the above, the reflection electron images obtained at any five locations were also subjected to the above measurement, and the number of particles having a particle size of 5 µm or more was counted based on the particle size of the resulting segregated phase containing fluorine atom and/or chlorine atom, thereby determining the number of segregated phase containing fluorine atom and/or chlorine atom(s) with a particle size of 5 µm or more, present in the visual field range of 256 µm × 166 µm. The value obtained by dividing the total number (total number in measurement at five locations) of segregated phase containing fluorine atom and/or chlorine atom(s) with a particle size of 5 µm or more by 256 µm × 166 µm × 5 being the measurement range, namely, the presence density of the segregated phase of 5 µm or more (the presence density of a segregated phase containing fluorine atom and/or chlorine atom with a particle size of 5 µm or more) was 2.5 × 10⁻⁵/µm². Herein, the segregated phase containing fluorine atom and/or chlorine atom detected by the above method in the present Example was subjected to componential analysis by EDS (Energy Dispersive Spectroscopy) analysis, and as a result, the phase was confirmed to be a fluorine atom- and/or chlorine atom-containing phase also by EDS analysis (the same result was also confirmed as in Examples 2 and 3, and Reference Example 1 described below.).

### <Production of metal-covered gadolinium wire rod>

The gadolinium wire having a wire diameter after hot swaging, of 2.6 mm, obtained as described above, was used as a core, and was inserted into a copper tube made of pure copper of C1220, having an inner diameter of 2.7 mm and an outer diameter of 3.5 mm, thereby providing a metal-covered gadolinium wire rod. Herein, any oxide film was removed in advance from the surface of the gadolinium wire by mechanical polishing and from the inner surface of the copper tube by washing with nitric acid.

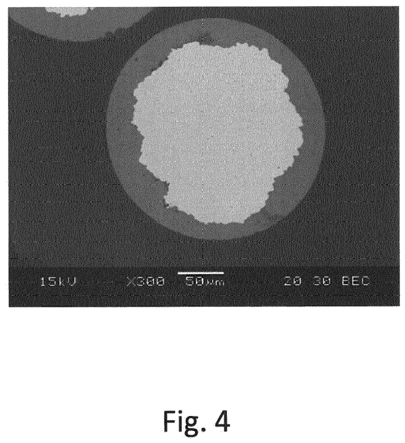

The resulting metal-covered gadolinium wire rod was then repeatedly extended using a die, with the target wire diameter after drawing being set to 0.25 mm, under a condition where the reduction of area per extending was 20%, thereby providing a drawn wire rod having a wire diameter of 0.25 mm. In the present Example, favorable extending could be conducted without the occurrence of failures such as breakage and/or sticking to the die. A cross section of the resulting drawn wire rod was then subjected to reflection electron image measurement and the resulting reflection electron image was used to determine the proportion of the gadolinium wire portion in the cross section of the drawn wire rod, and it was thus found that the proportion was 58%. A reflection electron image of the cross section of the drawn wire rod obtained in Example 1 is illustrated in Figure 4.

The resulting drawn wire rod was subjected to measurement of the segregated phase containing fluorine atom and/or chlorine atom (namely, measurement of each of the average particle size of the segregated phase and the presence density of the segregated phase of 5 µm or more) in the same manner as described above. The resulting drawn wire rod, however, was small in wire diameter and the cross-sectional area thereof was smaller than the visual field range of 256 µm × 166 µm, and therefore the drawn wire rod was cut at any five locations and all of any five cross sections perpendicular to the wire rod longitudinal direction were subjected to the measurement, to thereby providing the measurement results. As the measurement results, the average particle size of the segregated phase was 1.5 µm and the presence density of the segregated phase of 5 µm or more was 0/µm².

Next, the change in the surface temperature in application of a predetermined magnetic field to the resulting drawn wire rod was measured by thermography and the change in the surface temperature, obtained as the result of measurement, was determined as the value obtained under the assumption that the change in the surface temperature of the wire of pure gadolinium, obtained in Example 1, was 100%, and it was thus found that the amount of change in the surface temperature in Example 1 was 55%.

### <Example 2>

A metal-covered gadolinium wire rod was obtained in the same manner as in Example 1 except that the copper tube used was a copper tube made of pure copper of C1220, having an inner diameter of 2.7 mm and an outer diameter of 3.2 mm. The resulting metal-covered gadolinium wire rod was then repeatedly extended using a die, with the target wire diameter after drawing being set to 0.25 mm, under a condition where the reduction of area per extending was 20%, thereby providing a drawn wire rod having a wire diameter of 0.25 mm. In the present Example, favorable extending could be conducted without the occurrence of failures such as breakage and/or sticking to the die.

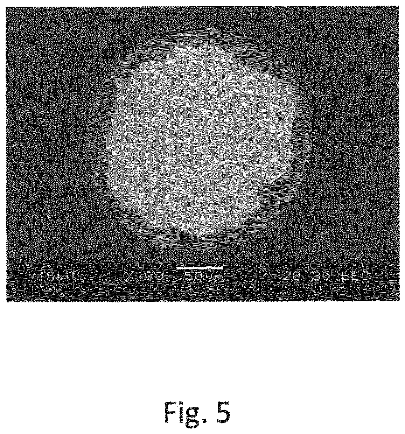

The resulting drawn wire rod was evaluated in the same manner as in Example 1, and it was found that the proportion of the gadolinium wire portion in the cross section of the drawn wire rod was 68% and the amount of change in the surface temperature under the assumption that the change in the surface temperature of the pure gadolinium wire was 100% was 69%. A reflection electron image of the cross section of the drawn wire rod obtained in Example 2 is illustrated in Figure 5.

The resulting drawn wire rod was subjected to measurement of the segregated phase containing fluorine atom and/or chlorine atom (namely, measurement of each of the average particle size of the segregated phase and the presence density of the segregated phase of 5 µm or more) in the same manner as described above. The resulting drawn wire rod, however, was small in wire diameter and the cross-sectional area thereof was smaller than the visual field range of 256 µm × 166 µm, and therefore the drawn wire rod was cut at any five locations and all of any five cross sections perpendicular to the wire rod longitudinal direction were subjected to the measurement, to thereby providing the measurement results. As the measurement results, the average particle size of the segregated phase was 1.5 µm and the presence density of the segregated phase of 5 µm or more was 0/µm².

### <Example 3>

A metal-covered gadolinium wire rod was obtained in the same manner as in Example 1 except that the copper tube used was a copper tube made of pure copper of C1220, having an inner diameter of 2.7 mm and an outer diameter of 3.0 mm. The resulting metal-covered gadolinium wire rod was then repeatedly extended using a die, with the target wire diameter after drawing being set to 0.25 mm, under a condition where the reduction of area per extending was 20%, thereby providing a drawn wire rod having a wire diameter of 0.25 mm. In the present Example, favorable extending could be conducted without the occurrence of failures such as breakage and/or sticking to the die.

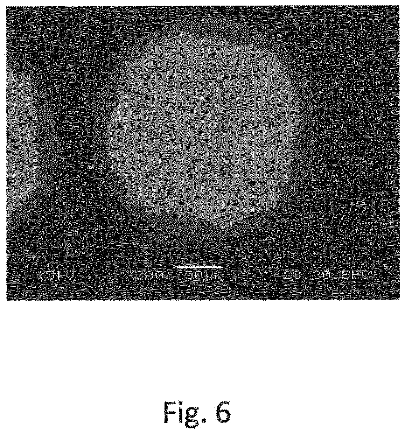

The resulting drawn wire rod was evaluated in the same manner as in Example 1, and it was found that the proportion of the gadolinium wire portion in the cross section of the drawn wire rod was 78% and the amount of change in the surface temperature under the assumption that the change in the surface temperature of the pure gadolinium wire was 100% was 84%. A reflection electron image of the cross section of the drawn wire rod obtained in Example 3 is illustrated in Figure 6.

The resulting drawn wire rod was subjected to measurement of the segregated phase containing fluorine atom and/or chlorine atom (namely, measurement of each of the average particle size of the segregated phase and the presence density of the segregated phase of 5 µm or more) in the same manner as described above. The resulting drawn wire rod, however, was small in wire diameter and the cross-sectional area thereof was smaller than the visual field range of 256 µm × 166 µm, and therefore the drawn wire rod was cut at any five locations and all of any five cross sections perpendicular to the wire rod longitudinal direction were subjected to the measurement, to thereby providing the measurement results. As the measurement results, the average particle size of the segregated phase was 1.5 µm and the presence density of the segregated phase of 5 µm or more was 0/µm².

### <Reference Example 1>

A metal-covered gadolinium wire rod was obtained in the same manner as in Example 1 except that the copper tube used was a copper tube made of pure copper of C1220, having an inner diameter of 2.7 mm and an outer diameter of 3.9 mm. The resulting metal-covered gadolinium wire rod was then repeatedly extended using a die, with the target wire diameter after drawing being set to 0.25 mm, under a condition where the reduction of area per extending was 20%, thereby providing a drawn wire rod having a wire diameter of 0.25 mm. In the present Reference Example, favorable extending could be conducted without the occurrence of failures such as breakage and/or sticking to the die.

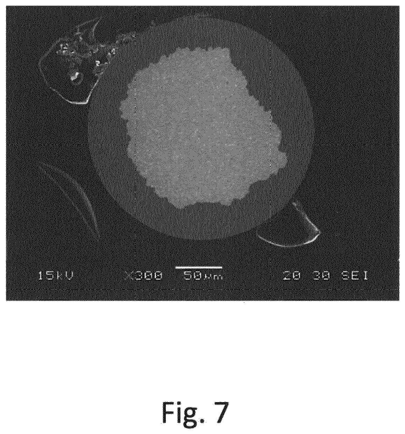

The resulting drawn wire rod was evaluated in the same manner as in Example 1, and it was found that the proportion of the gadolinium wire portion in the cross section of the drawn wire rod was 47% and the amount of change in the surface temperature under the assumption that the change in the surface temperature of the pure gadolinium wire was 100% was 44%. A reflection electron image of the cross section of the drawn wire rod obtained in Reference Example 1 is illustrated in Figure 7.

The resulting drawn wire rod was subjected to measurement of the segregated phase containing fluorine atom and/or chlorine atom (namely, measurement of each of the average particle size of the segregated phase and the presence density of the segregated phase of 5 µm or more) in the same manner as described above. The resulting drawn wire rod, however, was small in wire diameter and the cross-sectional area thereof was smaller than the visual field range of 256 µm × 166 µm, and therefore the drawn wire rod was cut at any five locations and all of any five cross sections perpendicular to the wire rod longitudinal direction were subjected to the measurement, to thereby providing the measurement results. As the measurement results, the average particle size of the segregated phase was 1.5 µm and the presence density of the segregated phase of 5 µm or more was 0/µm².

### [Table 1]

**Table 1**

| | Proportion of area of gadolinium wire (%) | Change in surface temperature relative to 100% of that of pure Gd wire (%) |
|---|---|---|
| Example 1 | 58 | 55 |
| Example 2 | 68 | 69 |
| Example 3 | 78 | 84 |
| Reference Example 1 | 47 | 44 |

The results in Examples 1 to 3 and Reference Example 1 are collectively shown in Table 1. It can be said from Table 1 that the metal-covered gadolinium wire rod of the present invention can allow a drawn wire rod whose wire diameter is as fine as 0.1 to 1.0 mm to be obtained with excellent processability, and the resulting drawn wire rod is also sufficient in the amount of change in the surface temperature and suitable as the magnetic refrigeration material in the magnetic refrigeration technology utilizing the magnetocaloric effect.

In Examples 1 to 3 and Reference Example 1, there was used the gadolinium wire as the core having any average particle size of the segregated phase containing fluorine atom and/or chlorine atom and any presence density of the segregated phase of 5 µm or more (the presence density of a segregated phase containing fluorine atom and/or chlorine atom with a particle size of 5 µm or more) which were within the predetermined ranges of the present invention, and thus, when the segregated phase was broken according to drawing (extending), the occurrence of growth of cracking was effectively prevented, thereby allowing particularly favorable processability to be exhibited; and furthermore, the resulting metal-covered gadolinium wire rod after drawing also had any average particle size of the segregated phase containing fluorine atom and/or chlorine atom and any presence density of the segregated phase of 5 µm or more which were within the predetermined ranges of the present invention, and thus were high in strength and excellent in processability.

## Claims

1. A metal-covered gadolinium wire rod comprising:
a gadolinium wire including gadolinium as a main component, as a core; and
a clad layer including, as a main component, a metal other than gadolinium, the clad layer covering the periphery of the core.

2. The metal-covered gadolinium wire rod according to claim 1, wherein an area occupied by the gadolinium wire in a cross section perpendicular to a longitudinal direction of the metal-covered gadolinium wire rod is 55 to 99% relative to an area of the cross section.

3. The metal-covered gadolinium wire rod according to claim 1 or 2, wherein the clad layer comprises copper, aluminum, nickel and/or an alloy thereof.

4. The metal-covered gadolinium wire rod according to any of claims 1 to 3, wherein the clad layer further comprises a carbon nanotube.

5. The metal-covered gadolinium wire rod according to any one of claims 1 to 4, wherein the metal-covered gadolinium wire rod is a drawn wire rod.

6. The metal-covered gadolinium wire rod according to any one of claims 1 to 5, wherein the gadolinium wire as the core comprises gadolinium as a main component, and has an average particle size of a segregated phase containing fluorine atom and/or chlorine atom of 2 µm or less.

7. The metal-covered gadolinium wire rod according to any one of claims 1 to 6, wherein the gadolinium wire as the core comprises gadolinium as a main component, and has a presence density of a segregated phase containing fluorine atom and/or chlorine atom with a particle size of 5 µm or more of 4.7 × 10⁻⁵/µm² or less.

8. A heat exchanger comprising:
a plurality of wire rods formed of a magnetic refrigeration material; and
a case housing the plurality of wire rods;
wherein the wire rods are each the metal-covered gadolinium wire rod according to any of claims 1 to 7.

9. A magnetic refrigerator comprising the heat exchanger according to claim 8.
